# FASCICULE DE BREVET EUROPEEN

(11) **EP 0 623 564 B1**
(45) Date de publication et mention de la délivrance du brevet: **07.02.1996**
(21) Numéro de dépôt: 94400869.7
(22) Date de dépôt: 21.04.1994
(51) Int. Cl.: C03C 17/25

(54) **Précurseur liquide pour la production de revêtements d'oxyde d'étain dopé au fluor et procédé de revêtement correspondant**
Flüssiges Ausgangsmaterial zur Herstellung von mit Fluor dotierten Zinn-Oxid-Beschichtungen und entsprechendes Beschichtungsverfahren
Liquid precursor for the production of fluorine-doped tin oxide coatings and corresponding coating process

(30) Priorité: 03.05.1993 FR 9305245
(43) Date de publication de la demande: 09.11.1994
(73) Titulaire: PRODUITS CHIMIQUES AUXILIAIRES ET DE SYNTHESE (P.C.A.S.), F-91160 Longjumeau (FR)
(72) Inventeur: Durant, Marcel, F-91540 Mennecy (FR); Merienne, Gilles, F-91360 Villemoisson sur Orge (FR); Valette, Dominique, F-91300 Massy (FR)
(74) Mandataire: Faber, Jean-Paul

(56) Documents cités:
- EP-A- 0 312 886
- EP-A- 0 338 417
- FR-A- 1 036 647
- US-A- 3 759 743
- CHEMICAL ABSTRACTS, vol. 107, no. 6, 10 Août 1987, Columbus, Ohio, US; abstract no. 45025f, page 328 ;

## Description

La présente invention concerne la production de revêtements d'oxyde d'étain dopé au fluor à partir d'un précurseur liquide, revêtements qui trouvent par exemple leur application comme éléments réfléchissant la chaleur dans des fenêtres à double vitrage.

Un précurseur du type précité a été proposé par EP-A-0 158 399 qui, en évoquant de façon assez détaillée l'état antérieur de la technique, énonce un certain nombre d'applications des revêtements dont il est question, les différents procédés mis en oeuvre pour obtenir de tels revêtements (pulvérisation de solutions, dépôt chimique en phase vapeur, dépôt de poudre), ainsi que les propriétés de ces revêtements (notamment faible résistivité pelliculaire et forte transmission de la lumière visible). Ce document mentionne en particulier les inconvénients des techniques connues, tels que l'utilisation de solvants organiques qu'il faut éliminer (demande de brevet japonaise 75 61 415), les difficultés de contrôle du débit de flux gazeux (EP-A-0 112 780), le danger d'explosion et le caractère toxique des produits employés (US-A-4 265 974) ou le recours obligé à des températures élevées lorsque le précurseur est solide (US 4 293 594).

Indépendamment des difficultés liées à la mise en oeuvre des procédés antérieurement connus, EP-A-0 158 399 souligne que les propriétés électriques des revêtements obtenus ne sont pas toujours satisfaisantes (demande de brevet japonaise 75 61 415 et EP-A-0 112 780) et, d'une manière générale, que leur transparence n'est pas optimale.

Pour remédier à ces inconvénients, EP-A-0 158 399 propose une composition liquide constituée d'un mélange comprenant (1), comme composé dopant, un dérivé organique fluoré, choisi entre l'acide trifluoroacétique, l'anhydride trifluoroacétique, le trifluoroacétoacétate d'éthyle, le trifluoroéthanol, le trifluoroacétate d'éthyle et l'acide pentafluoropropionique, (2) un dérivé organique d'étain choisi entre un trichlorure d'alkylétain, un dichlorure de dialkylétain, un acétate d'alkyldichloroétain, un diacétate de dialkylchloroétain, un acétate de dialkylchloroétain, un ester de tri- ou de tétrachlorure d'étain, et (3) éventuellement un dérivé organique polaire dont la fonction est de permettre à la composition de rester stable, en une phase, aux températures inférieures à la température ambiante.

En l'absence de ce dérivé organique polaire, qui est par exemple la méthylisobutylcétone, l'anhydride acétique ou l'acétate d'éthyle, les constituants (1) et (2) ne sont pas miscibles à froid ce qui rend difficile la réalisation d'un dépôt homogène. La présence du dérivé organique polaire rend le mélange homogène, mais également inflammable, et la vitesse de dépôt sur le substrat se trouve réduite. De plus, les rendements de pyrolyse sont relativement faibles, ce qui a l'inconvénient de générer, dans le système d'évacuation des fumées, une grande quantité de résidus solides contenant de l'oxyde d'étain.

Un autre document de l'art antérieur, à savoir US-A-4 857 095 propose d'utiliser une solution contenant du dibutoxydibutylétain et de l'acide trifluoroacétique pour produire une couche d'oxyde d'étain dopé au fluor. Bien que le déposant de ce brevet indique qu'il obtient un revêtement très limpide ayant un très faible degré de turbidité et pas de zones nébuleuses, en réalité, lors de l'utilisation de la technique en question, on observe beaucoup de dépôts blancs sur le verre formant substrat et dans le système d'évacuation des fumées.

JP-A-62 70247 (rapporté dans Chemical Abstracts, vol. 107, n° 6, 10 Août 1987, Columbus, Ohio, USA) enseigne qu'une solution mixte formée à partir :
- d'une solution d'un composé de l'étain contenant du fluor, telle qu'une solution de di(trifluoroacétate) de dibutyl- (ou diméthyl-)étain ou de tri(trifluoroacétate) de butylétain, et
- d'une solution d'un composé de l'étain contenant du chlore, telle qu'une solution de trichlorobutylétain ou de tétrachloroétain,
est pulvérisée sur des substrats de verre chauffé pour former une pellicule de SnO₂ dopée au fluor, ayant une faible résistivité aux rayons infra-rouge.

Le composé de l'étain contenant du fluor et le composé de l'étain contenant du chlore sont, dans tous les exemples de ce document antérieur, en solution dans du trichloroéthane.

Ce solvant, comme les autres solvants chlorés, est dangereux et toxique.

Malgré les nombreux travaux qu'a suscités la production de revêtements d'oxyde d'étain dopé au fluor sur des substrats, comme le montre l'état de la technique, il demeure un besoin en un précurseur qui permettrait de produire des revêtements d'oxyde d'étain dopé au fluor de haute qualité (c'est-à-dire d'une épaisseur régulière et dépourvus de zone trouble), avec de grandes vitesses de dépôt adaptées au revêtement en continu de verre plat dit "flotté", sans utilisation de solvant organique inflammable et/ou toxiques et débouchant sur des produits dans lesquels le revêtement présente une faible résistance électrique de surface et un coefficient élevé de transmission lumineuse.

Il a maintenant été découvert qu'en sélectionnant convenablement le composé de l'étain contenant du chlore et le composé de l'étain contenant du fluor, on obtenait un précurseur qui, à l'évaporation, donne une phase homogène dont la composition quantitative et qualitative correspond à celle du précurseur. Il s'ensuit qu'il devient possible de déposer ce précurseur en phase vapeur.

Un tel dépôt en phase vapeur n'est pas possible dans le cas des mélanges décrits par JP-A-62 70247 car, s'ils étaient soumis aux conditions d'un dépôt en phase vapeur, leur solvant CCl₃Me s'évaporerait avant les di- ou tri(fluoroalcanoates). C'est pourquoi JP-A-62 70247 a recours à une pyrolyse liquide.

Le dépôt en phase vapeur se traduit par des avantages considérables qui résultent de l'absence de solvant, lequel a non seulement, comme indiqué plus haut, un effet nocif sur la santé et sur l'environnement, mais aussi un effet nuisible sur le rendement du dépôt : en effet, la présence du solvant réduit nécessairement la quantité d'étain par unité de volume du précurseur, et il s'ensuit que la vitesse de dépôt de la couche d'étain dopée au fluor sur le verre est réduite en conséquence. Le dépôt par pyrolyse liquide est donc moins adapté à un dépôt continu sur verre flotté que le dépôt en phase vapeur.

L'invention propose donc un précurseur liquide renfermant, comme la solution mixte proposée par JP-A-62 70247, un dérivé organo-étain chloré et un fluoroalcanoate d'organoétain, mais qui s'en distingue essentiellement par le fait qu'il utilise, non pas un di- ou un tri(fluoroalcanoate), mais un mono(fluoroalcanoate), choix grâce auquel le recours à un solvant devient inutile.

Plus précisément, ledit précurseur selon l'invention est constitué :
- de 60 à 90 % en poids d'au moins un dérivé organo-étain chloré dans lequel l'atome d'étain est lié à au moins un atome de chlore et à au moins un atome de carbone d'une chaîne hydrocarbonée,
- de 5 à 30 % en poids d'au moins un mono(fluoroalcanoate) d'organoétain dans lequel l'atome d'étain est lié à au moins un atome de carbone d'une chaîne hydrocarbonée, et
- de 0 à 15 % en poids d'un composé tétraorganoétain dans lequel l'atome d'étain est lié à quatre atomes de carbone faisant chacun partie d'une chaîne hydrocarbonée,
étant entendu que par chaîne hydrocarbonée, on entend aussi bien une chaîne saturée qu'insaturée, acyclique que cyclique.

Plus précisément, le dérivé organo-étain chloré répond à la formule générale :

Rₓ - Sₙ - Cl₍₄₋ₓ₎ (I)

dans laquelle x représente 1, 2 ou 3 et le ou les radicaux R, identiques ou différents, désignent un radical alkyle ayant de 1 à 8 atomes de carbone ou un radical alkényle ayant de 2 à 8 atomes de carbone ou le radical phényle, les radicaux alkyle ou alkényle étant à chaîne droite ou éventuellement ramifiée pour autant que la chaîne comporte au moins 3 atomes de carbone.

De préférence, R représente un radical méthyle, butyle, isobutyle ou octyle. Mieux, le composé de formule (I) est le monobutyltrichloroétain ou le dibutyldichloroétain.

Le mono(fluoroalcanoate) d'organoétain répond à la formule générale :

(R₁)₃ - Sn - (OOC-R₂) (II)

dans laquelle les radicaux R₁, identiques ou différents, ont la même signification que le radical R de la formule (I) et le radical R₂ désigne un radical trifluorométhyle ou pentafluoroéthyle.

De préférence, R₁ est un radical méthyle ou butyle et R₂ est un radical trifluorométhyle. Mieux, le composé de formule (II) est le mono(trifluoroacétate) de triméthylétain ou le mono(trifluoroacétate) de tributylétain.

Le dérivé tétraorganoétain répond à la formule générale :

R₄Sn (III)

dans laquelle R a la même signification que dans la formule (I). De préférence les radicaux R, identiques ou différents, sont des radicaux méthyle, butyle ou isobutyle. Mieux, les quatre radicaux R sont identiques et le composé de formule (III) est le tétraméthylétain, le tétrabutylétain ou le tétraisobutylétain.

L'invention porte également sur un procédé de revêtement d'un substrat d'une mince couche d'oxyde d'étain dopé au fluor, par dépôt en phase à vapeur, qui consiste à soumettre le précurseur selon l'invention, à une vaporisation à une température comprise entre 120 et 300°C, à entraîner les vapeurs dudit précurseur par un courant d'air chauffé et à amener le flux gazeux résultant en contact avec le substrat, le contact se faisant à une température supérieure à la température de décomposition du précurseur, généralement supérieure à 350°C.

De préférence, le substrat est du verre flotté se trouvant à une température comprise entre 400 et 700°C au moment du contact.

On peut ainsi obtenir un revêtement qui, par exemple, sous une épaisseur de 4900 angströms, a une résistance pelliculaire inférieure à 35 ohm², une émissivité IR inférieure à 25 % et un voile inférieur à 1 %. La résistance pelliculaire est mesurée selon la norme ASTM F374 et le voile est calculé par le rapport (lumière diffusée/lumière totale transmise) x 100.

L'invention est décrite avec davantage de détails dans les exemples ci-après :

### Mode opératoire général

On mélange dans les proportions indiquées dans le Tableau 1 ci-dessous un ou plusieurs composés de formule (I), un ou plusieurs composés de formule (II) et éventuellement un ou plusieurs composés de formule (III), obtenant une solution stable et limpide à la température ambiante et même, pour certaines combinaisons particulières de composés, stable et limpide à une température bien inférieure à la température ambiante.

Pour produire, sur un substrat de verre flotté, un revêtement d'oxyde d'étain dopé au fluor à partir du précurseur que constitue le mélange obtenu ci-dessus, en mettant en oeuvre un processus de dépôt chimique en phase vapeur, on chauffe le précurseur liquide à une température comprise entre 120°C et 300°C, de préférence entre 210°C et 250°C, et les vapeurs ainsi formées sont entraînées par un courant d'air chauffé à une température voisine de celle du précurseur et fourni selon un débit permettant d'obtenir une concentration de 0,5 à 2 litres de précurseur par m³ d'air. Le courant gazeux est mis en contact avec le verre chauffé qui se trouve à une température comprise entre 400°C et 700°C et de préférence entre 550°C et 650°C, pour permettre une bonne vitesse de dépôt.

Le débit gazeux varie de 1,5 à 2 litres par minute, tandis que le verre, obtenu par le procédé float, défile à une vitesse variant entre 5 et 20 mètres par minute. En jouant sur le débit gazeux et la concentration de précurseur par m³ d'air, compte-tenu de la vitesse de défilement du verre, on peut contrôler l'épaisseur de revêtement déposé sur le verre.

Par cette technique et avec un précurseur selon l'invention, on peut obtenir des revêtements d'épaisseur variable allant jusqu'à 800 nanomètres.

### Exemples particuliers de mise en oeuvre

Les tableaux suivants indiquent respectivement :
1 - la composition de plusieurs exemples de précurseurs selon l'invention,
2 - les conditions de mise en oeuvre du procédé de revêtement, et
3 - les caractéristiques des revêtements obtenus.

Dans le tableau ci-dessous, Bu signifie butyle, Me signifie méthyle et, sous %, sont indiquées les proportions en composés (I), (II) ou (III).

Les précurseurs selon les exemples 1 à 4 sont des solutions stables et limpides à la température ambiante.

**Tableau 1**

| Exemples de compositions de précurseurs selon l'invention | | | |
|---|---|---|---|
| Exemples | Composé (I) | Composé (II) | Composé (III) |
| | R × % | R1 × R2 % | R % |
| 1 | Bu 1 85 | Bu 3 CF₃ 15 | - - |
| 2 | Bu 1 70 | Bu 3 CF₃ 30 | - - |
| 3 | Bu 1 70 | Bu 3 CF₃ 20 | Me 10 |
| 4 | Bu 1 60 | Me 3 CF₃ 30 | Me 10 |

**Tableau 2**

| Conditions de mise en oeuvre du procédé de dépôt en phase vapeur | | | | |
|---|---|---|---|---|
| Exemples | 1 | 2 | 3 | 4 |
| Température de l'air (°C) | 230 | 240 | 235 | 230 |
| débit gazeux (litre/mn) | 1,68 | 1,6 | 1,62 | 1,53 |
| vitesse du verre (m/mm) | 16 | 16 | 16 | 16 |
| température du verre (°C) | 615 | 625 | 615 | 625 |

**Tableau 3**

| Caractéristiques des revêtements obtenus | | | | |
|---|---|---|---|---|
| Exemples | 1 | 2 | 3 | 4 |
| épaisseur de la couche (angström) | 4900 | 4900 | 4900 | 4900 |
| résistance pelliculaire (ohm²) | 35 | 24 | 25 | 22 |
| émissivité IR (%) | 21 | 18 | 19 | 17 |
| voile % | 1 | 0,4 | 0,5 | 0,4 |

## Revendications

1. Précurseur liquide pour la production de revêtements d'oxyde d'étain dopé au fluor, du type comprenant un dérivé organo-étain chloré et un fluoroalcanoate d'organo-étain, caractérisé en ce qu'il est constitué :
- de 60 à 90 % en poids d'au moins un dérivé organo-étain chloré dans lequel l'atome d'étain est lié à au moins un atome de chlore et à au moins un atome de carbone d'une chaîne hydrocarbonée,
- de 5 à 30 % en poids d'au moins un mono(fluoroalcanoate) d'organoétain dans lequel l'atome d'étain est lié à au moins un atome de carbone d'une chaîne hydrocarbonée, et
- de 0 à 15 % en poids d'un composé tétraorganoétain dans lequel l'atome d'étain est lié à quatre atomes de carbone faisant chacun partie d'une chaîne hydrocarbonée.

2. Précurseur selon la revendication 1, caractérisé en ce que le dérivé organo-étain chloré répond à la formule générale :
Rₓ - Sₙ - Cl₍₄₋ₓ₎ (I)
dans laquelle x représente 1, 2 ou 3 et le ou les radicaux R, identiques ou différents, désignent un radical alkyle ayant de 1 à 8 atomes de carbone ou un radical alkényle ayant de 2 à 8 atomes de carbone ou le radical phényle, les radicaux alkyle ou alkényle étant à chaîne droite ou éventuellement ramifiée pour autant que la chaîne comporte au moins 3 atomes de carbone.

3. Précurseur selon la revendication 1 ou 2, caractérisé en ce que le dérivé organo-étain chloré est le monobutyltrichloroétain.

4. Précurseur selon la revendication 1 ou 2, caractérisé en ce que le dérivé organo-étain chloré est le dibutyldichloroétain.

5. Précurseur selon l'une quelconque des revendications 1 à 4, caractérisé en ce que le mono(fluoroalcanoate) d'organoétain répond à la formule générale :
(R₁)₃ - Sn - (OOC-R₂) (II)
dans laquelle
les radicaux R₁, identiques ou différents, désignent, un radical alkyle ayant de 1 à 8 atomes de carbone ou un radical alkényle ayant de 2 à 8 atomes de carbone ou le radical phényle, les radicaux alkyle ou alkényle étant à chaîne droite ou éventuellement ramifiée pour autant que la chaîne comporte au moins 3 atomes de carbone, et
le radical R₂ désigne un radical trifluorométhyle ou pentafluoroéthyle.

6. Précurseur selon l'une quelconque des revendications 1 à 5, caractérisé en ce que le mono(fluoroalcanoate) d'organoétain est le mono(trifluoroacétate) de triméthylétain.

7. Précurseur selon l'une quelconque des revendications 1 à 5, caractérisé en ce que le mono(fluoroalcanoate) d'organoétain est le mono(trifluoroacétate) de tributylétain.

8. Précurseur selon l'une quelconque des revendications 1 à 7, caractérisé en ce que le dérivé tétraorganoétain répond à la formule générale :
R₄Sn (III)
dans laquelle R désigne un radical alkyle ayant de 1 à 8 atomes de carbone ou un radical alkényle ayant de 2 à 8 atomes de carbone ou le radical phényle, les radicaux alkyle ou alkényle étant à chaîne droite ou éventuellement ramifiée pour autant que la chaîne comporte au moins 3 atomes de carbone.

9. Précurseur selon l'une quelconque des revendications 1 à 8, caractérisé en ce que le dérivé tétraorganoétain est le tétraméthylétain.

10. Précurseur selon l'une quelconque des revendications 1 à 8, caractérisé en ce que le dérivé tétraorganoétain est le tétrabutylétain.

11. Précurseur selon l'une quelconque des revendications 1 à 8, caractérisé en ce que le dérivé tétraorganoétain est le tétraisobutylétain.

12. Procédé de revêtement d'un substrat d'une mince couche d'oxyde d'étain dopé au fluor, par dépôt en phase à vapeur, caractérisé en ce qu'il consiste à soumettre le précurseur selon l'une quelconque des revendications 1 à 11, à une vaporisation à une température comprise entre 120 et 300°C, à entraîner les vapeurs dudit précurseur par un courant d'air chauffé et à amener le flux gazeux résultant en contact avec le substrat, le contact se faisant à une température supérieure à la température de décomposition du précurseur.

13. Procédé selon la revendication 12, caractérisé en ce que le substrat est du verre flotté se trouvant à une température comprise entre 400 et 700°C au moment du contact.

## Claims

1. A liquid precursor for the production of fluorine-doped tin oxide coatings, of the type including a chloric organotin derivative and an organotin fluoroalkanoate,
**characterised in that** it is made up of:
- 60 to 90 % by weight of at least one chloric organotin derivative in which the tin atom is connected to at least one atom of chlorine and to at least one atom of carbon of a hydrocarbon chain,
- 5 to 30 % by weight of at least one organotin mono(fluoroalkanoate) in which the tin atom is connected to at least one atom of carbon of a hydrocarbon chain, and
- 0 to 15 % by weight of a tetraorganotin compound in which the tin atom is connected to four atoms of carbon each forming part of a hydrocarbon chain.

2. A precursor according to Claim 1,
**characterised in that** the chloric organotin derivative complies with the general formula:
Rₓ - Sₙ - Cl(₄₋ₓ) (I)
in which x represents 1, 2 or 3 and the R radical or radicals, whether identical or different, designate an alkyl radical having 1 to 8 atoms of carbon or an alkenyl radical having 2 to 8 atoms of carbon or the phenyl radical, the alkyl or alkenyl radicals having a straight chain or possibly being branched provided that the chain has at least 3 atoms of carbon.

3. A precursor according to Claim 1 or 2,
**characterised in that** the chloric organotin derivative is monobutyltrichlorotin.

4. A precursor according to Claim 1 or 2, **characterised in that** the chloric organotin derivative is dibutyldichlorotin.

5. A precursor according to any one of Claims 1 to 4, **characterised in that** the organotin mono(fluoroalkanoate) complies with the general formula :
(R₂)₃ - Sn - (OOC-R₂) (II)
in which:
the R₁ radicals, whether identical or different, designate an alkyl radical having 1 to 8 atoms of carbon or an alkenyl radical having 2 to 8 atoms of carbon or the phenyl radical, the alkyl or alkenyl radicals having a straight chain or possibly being branched provided that the chain comprises at least 3 atoms of carbon and the R₂ radical designates a trifluoromethyl or pentafluoroethyl radical.

6. A precursor according to any one of Claims 1 to 5,
**characterised in that** the organotin mono(fluoroalkanoate) is trimethyl tin mono(trifluoroacetate).

7. A precursor according to any one of Claims 1 to 5,
**characterised in that** the organotin (monofluoroalkanoate) is tributlytin mono(trifluoroacetate).

8. A precursor according to any one of Claims 1 to 7,
**characterised in that** the tetraorganotin derivative complies with the general formula :
R₄Sn (III)
in which R designates an alkyl radical having 1 to 8 atoms of carbon or an alkenyl radical having 2 to 8 atoms of carbon or the phenyl radical, the alkyl or alkenyl radicals having a straight chain or possibly being branched provided that the chain has at least 3 atoms of carbon.

9. A precursor according to any one of Claims 1 to 8,
**characterised in that** the tetraorganotin derivative is tetramethyltin.

10. A precursor according to any one of Claims 1 to 8,
**characterised in that** the tetraorganotin derivative is tetrabutyltin.

11. A precursor according to any one of Claims 1 to 8,
**characterised in that** the tetraorganotin derivative is tetraisobutyltin.

12. A process for coating a substrate with a thin layer of fluorine-doped tin oxide, by vapour phase deposition,
**characterised in that** it consists of subjecting the precursor as specified by any one of Claims 1 to 11 to a vaporisation at a temperature of between 120 and 300°C, in entraining the vapours of the said precursor by a current of heated air and bringing the resultant gaseous flux into contact with the substrate, the contact occurring at the decomposition temperature of the precursor.

13. A process according to Claim 12,
**characterised in that** the substrate is float glass which is at a temperature of between 400 and 700°C at the moment of contact.

## Patentansprüche

1. Flüssiges Vorprodukt zur Herstellung von mit Fluor dotierten Zinn-Oxid-Beschichtungen der Art, daß es ein chloriertes Organozinnderivat und ein Organozinnfluoralkanoat umfaßt, dadurch gekennzeichnet, daß es gebildet ist aus:
- zumindest 60 bis 90 Gew% eines chlorierten Organozinnderivats, bei welchem das Zinnatom zumindest mit einem Chloratom und zumindest mit einem Kohlenstoffatom einer Kohlenwasserstoffkette verbunden ist,
- zumindest 5 bis 30 Gew% eines Organozinnmono(fluoralkanoats), bei welchem das Zinnatom mit zumindest einem Kohlenstoffatom einer Kohlenwasserstoffkette verbunden ist, und
- 0 bis 15 Gew% einer Tetraorganozinnverbindung, bei welcher das Zinnatom mit vier Kohlenstoffatomen verbunden ist, wobei jedes der Kohlenstofflatome Teil einer Kohlenwasserstoffkette ist.

2. Vorprodukt nach Anspruch 1, dadurch gekennzeichnet, daß das chlorierte Organozinnderivat der allgemeinen Formel:
Rₓ - Sₙ - CL(₄₋ₓ) (I)
entspricht, in welcher x 1, 2 oder 3 darstellt, und das oder die Radikale R, die gleich oder verschieden sein können, ein Alkylradikal mit 1 bis 8 Kohlenstoffatomen oder ein Alkenylradikal mit 2 bis 8 Kohlenstoffatomen oder das Phenylradikal bedeuten, wobei die Alkyl- oder Alkenylradikale geradkettig oder gegebenenfalls verzweigt sind, soweit die Kette zumindest aus 3 Kohlenstoffatomen besteht.

3. Vorprodukt nach Anspruch 1 oder 2, dadurch gekennzeichnet, daß das chlorierte Organozinnderivat Monobutylzinntrichlorid ist.

4. Vorprodukt nach Anspruch 1 oder 2, dadurch gekennzeichnet, daß das chlorierte Organozinnderivat Dibutylzinndichlorid ist.

5. Vorprodukt nach einem der Ansprüche 1 bis 4, dadurch gekennzeichnet, daß das Organozinnmono(fluoralkanoat) der allgemeinen Formel:
(R₁)₃ - Sn - (OOC-R₂) (II)
entspricht, in welcher die Radikale R₁, die gleich oder verschieden sein können, ein Alkylradikal mit 1 bis 8 Kohlenstoffatomen oder ein Alkenylradikal mit 2 bis 8 Kohlenstoffatomen oder das Phenylradikal bedeuten, wobei die Alkyl- oder Alkenylradikale geradkettig oder gegebenenfalls verzweigt sind, soweit die Kette zumindest aus 3 Kohlenstoffatomen besteht, und das Radikal R₂ ein Trifluormethyl- oder Pentafluorethylradikal darstellt.

6. Vorprodukt nach einem der Ansprüche 1 bis 5, dadurch gekennzeichnet, daß das Organozinnmono(fluoralkanoat) das Mono(trifluoracetat) von Trimethylzinn ist.

7. Vorprodukt nach einem der Ansprüche 1 bis 5, dadurch gekennzeichnet, daß das Organozinnmono(fluoralkanoat) das Mono(trifluoracetat) von Tributylzinn ist.

8. Vorprodukt nach einem der Ansprüche 1 bis 7, dadurch gekennzeichnet, daß das Tetraorganozinnderivat der allgemeinen Formel:
R₄ Sn (III)
entspricht, in welcher R₄ ein Alkylradial mit 1 bis 8 Kohlenstoffatomen oder ein Alkenylradikal mit 2 bis 8 Kohlenstoffatomen oder das Phenylradikal bedeuten, wobei die Alkyl- oder Alkenylradikale geradkettig oder gegebenenfalls verzweigt sind, soweit die Kette zumindest aus drei Kohlenstoffatomen besteht.

9. Vorprodukt nach einem der Ansprüche 1 bis 8, dadurch gekennzeichnet, daß das Tetraorganozinnderivat Tetramethylzinn ist.

10. Vorprodukt nach einem der Ansprüche 1 bis 8, dadurch gekennzeichnet, daß das Tetraorganozinnderivat Tetrabutylzinn ist.

11. Vorprodukt nach einem der Ansprüche 1 bis 8, dadurch gekennzeichnet, daß das Tetraorganozinnderivat Tetraisobutylzinn ist.

12. Verfahren zur Beschichtung eines Substrates mit einer dünnen mit Fluor dotierten Zinn-Oxid-Schicht durch Abscheidung aus der Dampfphase, gekennzeichnet dadurch, daß es darin besteht, das Vorprodukt nach einem der Ansprüche 1 bis 11 einer Verdampfung bei einer Temperatur zwischen 120 und 300°C zu unterwerfen, die Dämpfe des genannten Vorproduktes im heißen Luftstrom mitzuführen und den resultierenden gasförmigen Strom in Kontakt mit dem Substrat zu bringen, wobei der Kontakt bei einer Temperatur oberhalb der Zersetzungstemperatur des Vorproduktes erfolgt.

13. Verfahren nach Anspruch 12, dadurch gekennzeichnet, daß das Substrat Floatglas ist, das sich zum Zeitpunkt des Kontaktes bei einer Temperatur zwischen 400 und 700°C befindet.
